## Europäisches Patentamt
## European Patent Office
## Office européen des brevets

(11) Veröffentlichungsnummer: **0 263 350 B1**

# EUROPÄISCHE PATENTSCHRIFT

(45) Veröffentlichungstag der Patentschrift: 07.08.91

(51) Int. Cl.⁵: **E04B 1/26**

(21) Anmeldenummer: **87113854.1**

(22) Anmeldetag: **22.09.87**

(54) **Verbinderkörper für den Holzbau.**

(30) Priorität: 06.10.86 DE 3634039

(43) Veröffentlichungstag der Anmeldung:
**13.04.88 Patentblatt 88/15**

(45) Bekanntmachung des Hinweises auf die
Patenterteilung:
**07.08.91 Patentblatt 91/32**

(84) Benannte Vertragsstaaten:
**AT BE CH DE FR GB LI LU NL SE**

(56) Entgegenhaltungen:
**EP-A- 0 127 095**
**WO-A-86/02398**
**DE-A- 3 015 934**
**US-A- 2 396 717**

(73) Patentinhaber: **Bertsche, Peter**
**Tafertsbergstrasse 5**
**W-8371 Prackenbach(DE)**

(72) Erfinder: **Bertsche, Peter**
**Tafertsbergstrasse 5**
**W-8371 Prackenbach(DE)**

(74) Vertreter: **Klunker . Schmitt-Nilson . Hirsch**
**Winzererstrasse 106**
**W-8000 München 40(DE)**

## Beschreibung

Die Erfindung betrifft einen Verbinderkörper, der in einer Sackbohrung eines Holzbauteils verankerbar ist, sowie ein Verfahren zum Einbringen eines solchen Verbinderkörpers in ein Holzbauteil.

Bei Holzkonstruktionen werden kraftübertragende Verbindungen benötigt, die starke Zugbeanspruchungen in Längsrichtung der angrenzenden Holzbalken vertragen. Es wurden bereits erhebliche Anstrengungen unternommen, Verbinderkörper zu entwickeln, die hochbelastbar sind, sich einfach und billig herstellen lassen und die außerdem eine rasche Montage ermöglichen. Von dem Anmelder wurde bereits eine kraftübertragende Holzverbindung entwickelt (EP 0 127 095), die im wesentlichen aus einem Rohrkörper besteht, der in eine Sackbohrung des Holzbalkens eingeschoben wird und in der Sackbohrung durch radial nach außen in das Holz ausgetriebene Stahlstifte gehalten wird. Es hat sich gezeigt, daß diese Holzverbindungen den obengenannten Forderungen weitgehend Rechnung tragen, allerdings ist diese bekannte Konstruktion insoweit noch verbesserungswürdig, als nicht nur der Rohrkörper und die zu dessen Fixierung benötigten Stahlstifte selbst in der Herstellung ziemlich aufwendig sind, sondern darüberhinaus auch noch ein kompliziertes Treibwerkzeug zum Fixieren der Stahlstifte benötigt wird. Das Fixieren des bekannten Verbinderkörpers geschieht zwar in relativ kurzer Zeit, ist aber dennoch mit einem Aufwand verbunden, der bei einer großen Anzahl herzustellender Verbindungen zu einem beträchtlichen Gesamt-Zeitaufwand führt.

In der US 2,396,717 ist eine Verbindungsanordnung für Holzbauteile beschrieben, bei der durch drei übereinanderliegende Bauteile ein Hohlbolzen gesteckt wird, dessen Inneres ebenso wie in seiner Nachbarschaft ausgebildete Hohlräume der Bauteile mit Kunststoff ausgefüllt werden.

Der Erfindung liegt die Aufgabe zugrunde, einen in einer Sackbohrung verankerten Verbinderkörper für den Holzbau zu schaffen, der billig in der Herstellung ist, in kurzer Zeit an dem betreffenden Holzbauteil verankert werden kann und extremen Zugbelastungen zu wiederstehen vermag.

Die Lösung dieser Aufgabe ist im Patentanspruch 1 angegeben. In der einfachsten Ausführungsform umfaßt der erfindungsgemäße Verbinderkörper ein Einsetzteil oder einen Einsetzkörper, bestehend aus einer später in der Nähe des Bodens in der Sackbohrung befindlichen inneren Abschlußplatte und einem Kraftübertragungsstab, der an der Platte zum Beispiel durch Schweißen befestigt ist, weiterhin mindestens einen Stabdübel der die Sackbohrung durchsetzt, und den Vergußmasse-Körper. Diese Teile stellen einen Verbundblock dar, der als Verbinderkörper extremen Zugbelastungen standzuhalten vermag.

Ist nur ein Kraftübertragungsstab vorgesehen, der dann zweckmäßigerweise zentrisch an der inneren Abschlußplatte angeschweißt ist, so kann dessen anderes Ende aus der Sackbohrung herausragen, so daß äußere Verbindungsteile angeschlossen werden können. Wird nun dieser Verbinderkörper auf Zug beansprucht, wird die Kraft durch den Kraftübertragungsstab auf die innere Abschlußplatte, von dort auf den Vergußmasse-Körper und von diesem teilweise direkt auf die Wandung der Sackbohrung und im übrigen und größtenteils über die Stahldübel in das Holz übertragen.

In einer etwas aufwendigeren, aber dafür in der Handhabung wesentlich bequemeren Ausführungsform ist vorgesehen, daß eine zweite, äußere Abschlußplatte vorgesehen ist, deren Außenquerschnitt an den Öffnungsquerschnitt der Sackbohrung angepaßt ist, und daß mindestens ein Kraftübertragungsstab mit seinen beiden Enden an den einander zugewandten Enden der beiden Abschlußplatten befestigt ist. Vorzugsweise besitzt die äußere Abschlußplatte eine Gewindebohrung, in die von außen ein Verbindungsstück, zum Beispiel ein Zugstab, eingeschraubt werden kann.

Das Einpressen der Vergußmasse macht es erforderlich, daß die verdrängte Luft entweicht. Hierzu besitzt die innere Abschlußplatte ein vorzugsweise zentrisch angeordnetes Entlüftungsloch, welches mit einer Entlüftungsbohrung in dem Holzbauteil in Verbindung steht. Wenn nun in der äußeren Abschlußplatte eine Gewindebohrung ist, wird die Vergußmasse durch die Gewindebohrung hindurch in die Sackbohrung eingepreßt. Die dabei verdrängte Luft entweicht durch das Entlüftungsloch in der inneren Abschlußplatte und die Entlüftungsbohrung.

Der Querschnitt der Sackbohrung und mithin der einen oder der beiden Abschlußplatten ist vorzugsweise kreisförmig, in nicht ganz so günstiger Ausführungsform rechteckig oder quadratisch, in weniger günstigen Ausführungsformen auch oval oder beliebig polygonförmig.

Bei den Kraftübertragungsstäben kann es sich um Gewindestäbe handeln, vorzugsweise handelt es sich um Baustahl-Stücke. Die Stäbe können mit ihren Enden an die einander zugewandten Seiten der Abschlußplatten angeschweißt sein. Man kann aber auch Bohrungen in den Abschlußplatten vorsehen, so daß die Kraftübertragungsstäbe in die Bohrungen hineinragen oder die Bohrungen durchsetzen. Die Stäbe können dann auf den Außenseiten der Abschlußplatten in irgendeiner geeigneten, an sich bekannten Weise fixiert sein.

Eine besonders günstige kraftschlüssige Verbindung innerhalb des Verbinderkörpers ergibt sich dann, wenn vier Kraftübertragungsstäbe vorgesehen sind, die - im Querschnitt betrachtet - symmetrisch an den Ecken eines Quadrats angeordnet sind. Der Querschnitt und der Abstand der Kraftübertragungsstäbe sind so gewählt, daß die quer zu diesen verlaufenden Stabdübel die Zwischenräume zwischen den Kraftübertragungsstäben durchsetzen. Mit Hilfe einer Schablone können die Stahldübel so in das Holzbauteil eingetrieben werden, daß sie genau zwischen den Kraftübertragungsstäben hindurchlaufen. Verwendet man Baustahl-Stücke, deren Oberfläche gerippt ist, ergibt sich eine formschlüssige Kraftübertragung innerhalb des ausgehärteten Verbundblocks. Vorzugsweise wird als Vergußmasse Epoxidharz verwendet.

Die Montage des erfindungsgemäßen Verbinderkörpers ist sehr einfach und schnell durchzuführen. Nachdem in dem Holzbauteil eine Sackbohrung und eine in deren Boden mündende Entlüftungsbohrung gebildet sind, wird der Einsetzkörper (Abschlußplatte oder Abschlußplatten mit Kraftübertragungsstäben) in die Sackbohrung eingesetzt. Nach dem Eintreiben der Stabdübel quer zur Richtung der Sackbohrung wird die Vergußmasse in die Sackbohrung eingepreßt. Nach dem sehr rasch erfolgenden Aushärten der Vergußmasse ist der Verbinderkörper für die Weiterverarbeitung des Holzbauteils fertig.

Im folgenden werden Ausführungsbeispiele der Erfindung anhand der Zeichnung näher erläutert. Es zeigen:

Fig. 1    eine Schnittansicht eines Holzbalkens mit eingesetztem Verbinderkörper entsprechend der Schnittlinie I-I in Fig. 2,

Fig. 2    eine schematische Seitenansicht des mit dem Verbinderkörper bestückten Holzbalkens nach Fig. 1,

Fig. 3    eine abgewandelte Ausführungsform eines Verbinderkörpers,

Fig. 4    eine dritte Ausführungsform eines Verbinderkörpers,

Fig. 5    eine perspektivische Ansicht eines mit einer Sackbohrung versehenen Holzbalkens mit noch nicht eingesetztem Verbinderkörper,

Fig. 6    eine Seitenansicht mit einer weiteren Ausführungsform eines Verbinderkörpers, und

Fig. 7    eine Schnittansicht entlang der Linie VII-VII in Fig. 6.

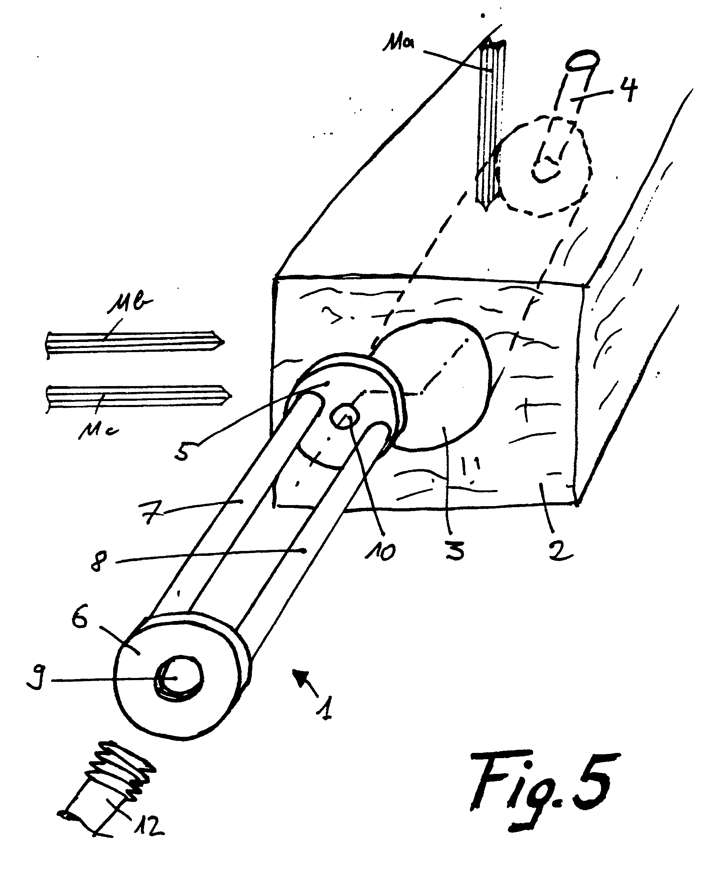

Es sei zunächst Fig. 5 betrachtet, in der in perspektivischer Darstellung das Ende eines Holzbalkens 2 mit einer Sackbohrung 3 dargestellt ist, in die ein aus Stahl bestehender Einsetzkörper 1 eingesetzt und fixiert werden soll.

In den Boden der Sackbohrung 3 des Holzbalkens 2 mündet eine Entlüftungsbohrung 4, deren Aufgabe später noch erläutert wird.

Der Einsetzkörper 1 besteht aus einer ersten, später innen liegenden Abschlußplatte 5, einer zweiten, später außen liegenden und mit ihrer Außenfläche vorzugsweise mit der Stirnfläche des Balkens 2 fluchtenden Abschlußplatte 6, und außerdem aus zwei Kraftübertragungsstäben 7 und 8, die mit ihren beiden Enden an die Abschlußplatten 5 und 6 angeschweißt sind. Bei den Kraftübertragungsstäben 7 und 8 handelt es sich hier um Baustahl-Stücke mit gerippter Oberfläche. Die erste Abschlußplatte 5 besitzt ein zentrisches Entlüftungsloch 10. Die äußere Abschlußplatte 6 besitzt eine zentrisch angeordnete Gewindeöffnung 9.

Die Sackbohrung 3 ist so bemessen, daß die Außenseite der Abschlußplatte 6 bei vollständig eingeschobenen Einsetzkörper 1 mit der Stirnseite des Balkens 2 fluchtet. Nachdem der Einsetzkörper 1 eingesetzt ist, werden von der Oberseite und von der linken Seite her Stabdübel 11a bzw. 11b, 11c in den Holzbalken eingetrieben, und zwar senkrecht zu der Sackbohrung und dem Einsetzkörper 1. Die Stabdübel 11a, 11b, 11c haben eine solche Länge, daß der Balken 2 in seiner Höhe bzw. Breite fast vollständig durchsetzt ist. Der eingetriebene Stabdübel 11a läuft zwischen den beiden Kraftübertragungsstäben 7 und 8 durch. Die von der Seite her eingetriebenen Stabdübel 11b und 11c schließen die beiden Kraftübertragungsstäbe 7 und 8 ein. Dies ist in Fig. 4 im einzelnen dargestellt. Die beiden Abschlußplatten 5 und 6 haben einen Außenquerschnitt, der im wesentlichen dem Öffnungquerschnitt der Sackbohrung 3 entspricht. Die Sackbohrung hat nur ein geringes Übermaß. Aus Fig. 4 geht auch hervor, daß die Projektion der Stahldübel 11a, 11b, 11c auf die Ebene der Abschlußplatte 5 auf der Abschlußplatte selbst liegt. Die eingetriebenen Stahldübel würden also ein Herausziehen des Einsetzkörpers 1 aus der Sackbohrung 3 verhindern.

Nachdem der Einsetzkörper 1 in der Sackbohrung 3 sitzt und die Stabdübel eingetrieben sind, wird durch die Gewindebohrung 9 in der äußeren Abschlußplatte 6 Epoxidharz in die Sackbohrung eingepreßt. Die dabei verdrängte Luft entweicht durch das Entlüftungsloch 10 in der inneren Abschlußplatte 5 und die daran anschließende Entlüftungsbohrung 4 in dem Holzbalken. Nach dem Aushärten des Epoxidharzes bildet das Harz einen Vergußmasse-Körper, in welchem die Kraftübertragungsstäbe 7 und 8 und die Stabdübel 11a, 11b, 11c innerhalb der Sackbohrung fixiert sind. Diese Teile bilden also insgesamt einen Verbundblock, der mit dem Holzbalken 7 derart stark verbunden ist, daß er extreme Zugbeanspruchungen aufzunehmen vermag.

Bei den Stahldübeln 11a, 11b, 11c handelt es sich um Stahldübel mit H-Querschnitt, wie in Fig. 5 speziell beim Stabdübel 11a gezeigt ist. Diese Stabdübel haben den Vorteil, daß sie in das Holz eingetrieben werden können, ohne daß vorher Bohrungen gemacht werden müssen. Man kann statt der Stabdübel mit H-Querschnitt auch Stabdübel mit kreisrundem Querschnitt verwenden. Diese müssen im Hinblick auf die zu erwartende Belastung aber einen solchen Querschnitt aufweisen, daß es erforderlich ist, für diese Runddübel vorher Bohrungen in den Holzbalken einzubringen.

In die Gewindebohrung 9 der äußeren Abschlußplatte 6 kann ein Verbindungsglied eingeschraubt werden, zum Beispiel ein mit einem Gewindebolzen 12 (Fig. 5) versehenes Verbindungsglied.

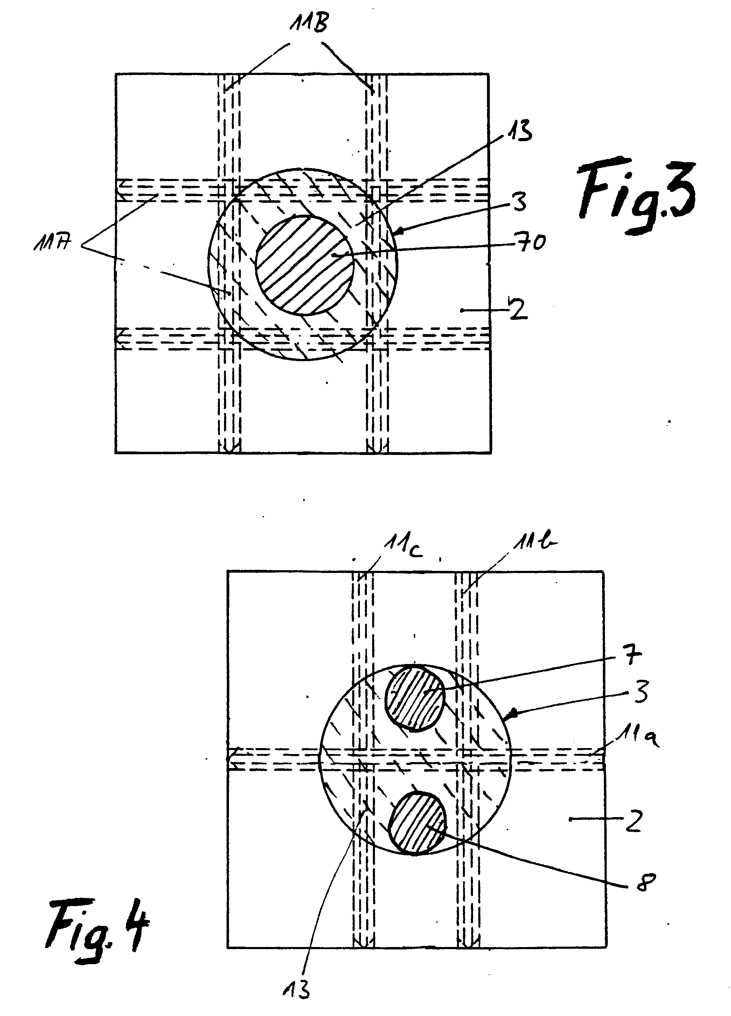

Bei der in den Fig. 4 und 5 dargestellten Ausführungsform sind zwei Kraftübertragungsstäbe vorgesehen. Man kann aber auch, wie in Fig. 3 gezeigt, einen einzigen Kraftübertragungsstab 70 vorsehen. In diesem Fall kann man auf die äußere Abschlußplatte auch verzichten und das äußere Ende des Kraftübertragungsstabs 70 (bei dem es sich vorzugsweise um einen Gewindestab handelt) zum Anschließen an äußere Bauteile verwenden. In den Fig. 3 und 4 ist der Vergußmasse-Körper mit dem Bezugszeichen 13 versehen. Die Vergußmasse füllt die gesamt Sackbohrung aus und dient zur Kraftübertragung zwischen dem Kraftübertragungsstab bzw. den Kraftübertragungsstäben, den Abschlußplatten und den Stabdübel die quer durch die Sackbohrung verlaufen.

Bei der Ausführungsform nach Fig. 3 bilden zwei Paare von Stabdübel 11A bzw. 11B in der Projektion auf die Ebene der Abschlußplatte ein Quadrat, welches im wesentlichen mit der Fläche der Abschlußplatte zusammenfällt.

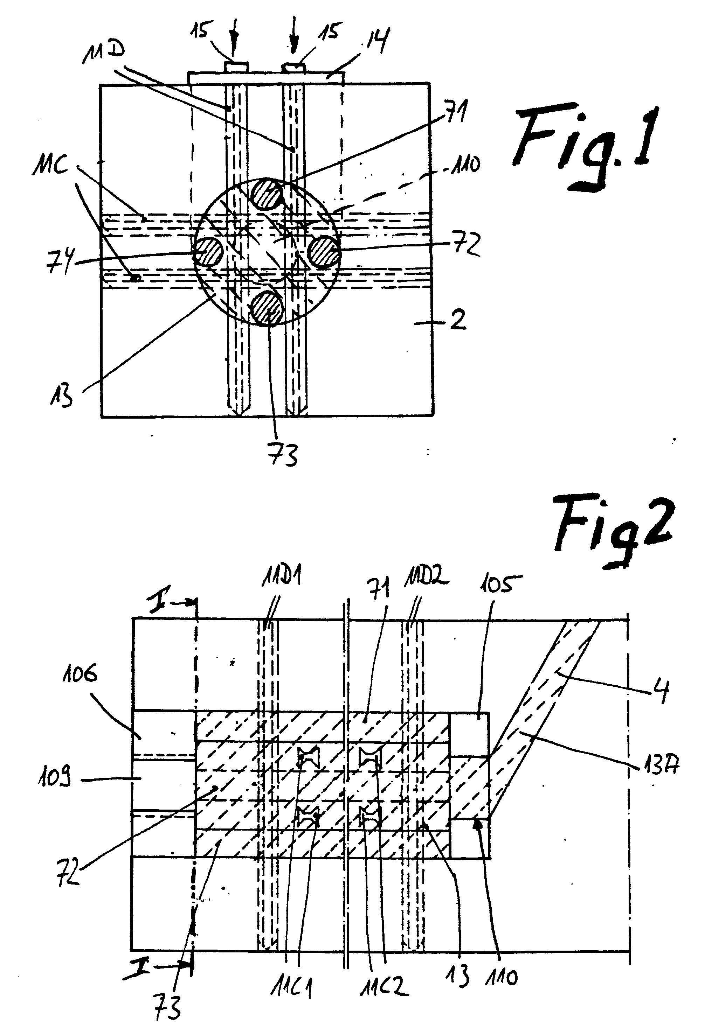

Fig. 1 und 2 zeigen eine besonders bevorzugte Ausführungsform der Erfindung. Bei dieser Ausführungsform sind vier jeweils aus einem Baustahl-Stück mit gerippter Oberfläche bestehende Kraftübertragungsstäbe 71, 72, 73 und 74 vorgesehen, die mit ihren Enden an die einander zugewandten Seitenflächen einer äußeren Abschlußplatte 106 und einer inneren Abschlußplatte 105 angeschweißt sind. Wie bei dem Ausführungsbeispiel nach Fig. 4 und 5 besitzt die innere Abschlußplatte 105 ein zentrisches Entlüftungsloch 110, an das sich die Entlüftungsbohrung 4 anschließt, während die äußere Abschlußplatte 106 eine zentrische Gewindebohrung 109 besitzt.

Bei diesem Verbinderkörper liegen die vier Kraftübertragungsstäbe in der seitlichen Projektion in drei Ebenen und bilden dadurch zwei Freiräume zur Aufnahme der horizontalen Stabdübel Es sind in der Horizontalen zwei Paare von Stabdübel 11C1 und 11C2 vorgesehen. Entsprechend sind in der Vertikalen zwei Paaren von Stabdübel 11D1 bzw. 11D2 vorgesehen.

Bei den Ausführungsbeispielen nach Fig. 3, 4 und 5 liegen die Projektionen der Stabdübel auf dem Bereich der Abschlußplatten-Ebene auf der Abschlußplatte selbst. Wie Fig. 1 zeigt, sind jeweils einem Stabdübel auf der einen Seite zwei Kraftübertragungsstäbe und auf der anderen Seite ein Kraftübertragungsstab benachbart.

Wie Fig. 2 zeigt, füllt die ausgehärtete Vergußmasse als Vergußmasse-Körper 13 bzw. 13a nicht nur das Innere der Sackbohrung, sondern auch den Entlüftungskanal 4 aus.

Damit die Stabdübel exakt an den vorgesehenen Stellen die Sackbohrung durchsetzen, wird vorzugsweise von einer Schablone 14 (Fig. 1) Gebrauch gemacht. Die Schablone 14 wird - ausgerichtet mit der Sackbohrung - auf die betreffende Seite des Holzbalkens 2 aufgesetzt. Dann werden in Aufnahmeöffnungen 15 die Stahlstifte 11 eingesetzt und einzeln oder gleichzeitig in den Holzbalken 11 eingetrieben.

Die Stabdübel können runden oder profilierten Querschnitt haben. Als Vergußmaterial können außer Epoxyharz auch Fertigmörtel auf Zementbasis verwendet werden.

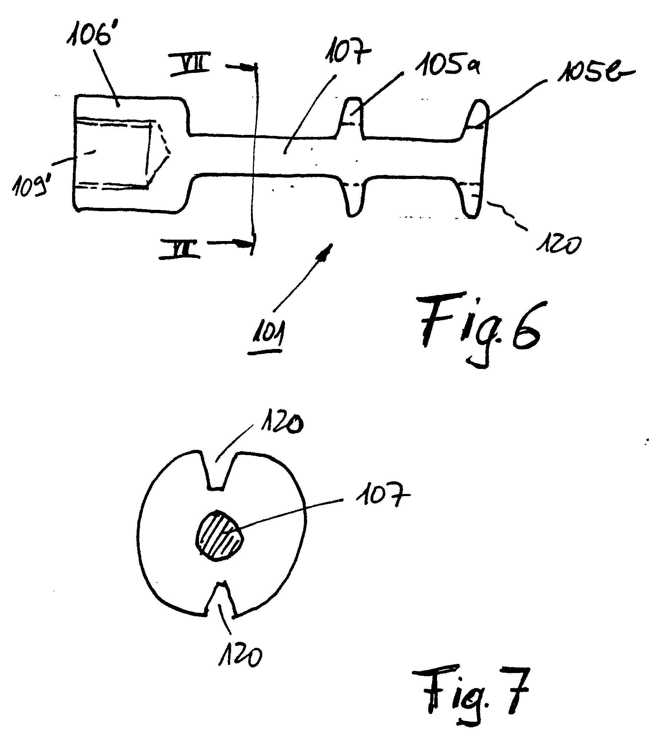

In Fig. 6 ist eine besonders bevorzugte Ausführungsform der Erfindung dargestellt. Bei dieser Ausführungsform ist ein Einsetzkörper 101, der in eine Sackbohrung eines Holzbalkens eingesetzt wird, als Stahlgußteil ausgebildet. An einem Abschlußkopf 106′, der mit einer Gewindeöffnung 109′ versehen ist, schließt ein runder Kraftübertragungsstab 107 an, mit dem einstückig eine Halteplatte 105a und eine Abschlußplatte 105b ausgebildet sind. In den beiden Platten 105a und 105b sind Lücken 120 ausgebildet, die ein Durchströmen der Vergußmasse beim Einbau des Einsetzkörpers ermöglichen.

In einer weiter abgewandelten Ausführungsform können auch mehrere Halteplatten, ähnlich der Halteplatte 105a entlang des Kraftübertragungsstabs 107 vorgesehen sein.

In weiterer Abwandlung der Ausführungsform nach Fig. 6 und 7 kann der Einsetzkörper auch mit einem im Querschnitt etwa quadratischen Kraftübertragungsstab ausgestattet sein, wobei die Halte- und Abschlußplatten ebenfalls quadratischen Querschnitt haben können.

Anstelle des Gewindes 109′ kann auch ein Kopfbolzen an den Abschnitt 106′ angeformt sein.

## Patentansprüche

1. In einer Sackbohrung in einem Holzbauteil verankerter Verbinderkörper, umfassend folgende Merkmale:

   a) eine erste, innere Abschlußplatte (5; 105) mit einem definierten Einbau-Außenquerschnitt entsprechend dem Öffnungsquerschnitt der Sackbohrung (3);

   b) mindestens einen parallel zu der Längsachse der Sackbohrung (3) verlaufenden Kraftübertragungsstab (7, 8; 70; 71-74), der fest mit der ersten Abschlußplatte (5; 105) verbunden ist und von dieser in Richtung auf die Öffnung der Sackbohrung (3) verläuft;

c) mindestens einen Stabdübel (11a, 11b, 11c; 11A, 11B; 11C, 11D), der in einer zu dem Kraftübertragungsstab senkrechten Ebene in das Holzbauteil (2) eingetrieben ist und die Sackbohrung (3) derart durchsetzt, daß seine Projektion auf die Ebene der ersten Abschlußplatte (5; 105) zumindest teilweise auf der Abschlußplatte selbst liegt;

d) einen starren Vergußmasse-Körper (13) in der Sackbohrung, welcher den Kraftübertragungsstab und den Stabdübel um-gibt und mit diesen Teilen einen Verbundblock bildet, und

e) einem an dem Verbinderkörper ausgebildeten Verbindungsteil (9, 109, 70, 109') zur Verbindung mit einem anderen Körper.

2. Verbinderkörper nach Anspruch 1, dadurch **gekennzeichnet**, daß der mindestens eine Kraftübertragungsstab (70) als aus der Sackbohrung (3) herausgeführtes Verbindungsteil ausgebildet ist.

3. Verbinderkörper nach Anspruch 1 oder 2, dadurch **gekennzeichnet,** daß eine zweite, äußere Abschlußplatte (6; 106) vorgesehen ist, deren Außenquerschnitt an den Öffnungsquerschnitt der Sackbohrung (3) angepaßt ist, und daß mindestens ein Kraftübertragungsstab (7, 8; 71-74) mit seinen beiden Enden an den einander zugewandten Seiten der ersten und der zweiten Abschlußplatte befestigt ist.

4. Verbinderkörper nach Anspruch 3, dadurch **gekennzeichnet**, daß die zweite Abschlußplatte (6; 106) als Verbindungsteil eine Gewindebohrung (9; 109) besitzt.

5. Verbinderkörper nach einem der Ansprüche 1 bis 4, dadurch **gekennzeichnet,** daß die erste, innere Abschlußplatte (5; 105) ein, vorzugsweise zentrisches, Entlüftungsloch (10; 110) besitzt, das mit einer Entlüftungsbohrung (4) in dem Holzbauteil (2) in Verbindung steht.

6. Verbinderkörper nach einem der Ansprüch 1 bis 5, dadurch **gekennzeichnet,** daß der Querschnitt der Abschlußplatte bzw. der Abschlußplatten (5, 105, 6, 106) kreisförmig ist.

7. Verbindungskörper nach einem der Ansprüche 1 bis 5, dadurch **gekennzeichnet,** daß der Querschnitt er Abschlußplatte bzw. der Abschlußplatten (5, 105, 6, 106) rechteckig ist.

8. Verbinderkörper nach einem der Ansprüche 3 bis 7, dadurch **gekennzeichnet,** daß der Kraftübertragungsstab (7, 8, 70, 71-74) ein Gewindestahl ist, der mit seinen beiden Enden an Seitenflächen der beiden Abschlußplatten (5, 105, 6, 106) angeschweißt ist.

9. Verbinderkörper nach einem der Ansprüche 1 bis 8, dadurch **gekennzeichnet,** daß zwei, vorzugsweise vier, Kraftübertragungsstäbe (7, 8; 71-74) in symmetrischer Anordnung vorgesehen sind.

10. Verbinderkörper nach einem der Ansprüche 1 bis 9 mit vier Kraftübertragungsstäben, dadurch **gekennzeichnet,** daß die Kraftübertragungsstäbe (71-74) Baustahl-Stücke mit gerippter Oberfläche sind, und daß die vier Stäbe derart bemessen und in der Sackbohrung angeordnet sind, daß jeder Stahldübel (11C, 11D) auf der einen Seite von einem, auf der anderen Seite von zwei Kraftübertragungsstäben benachbart ist.

11. Verbinderkörper nach einem der Ansprüche 1 bis 10, dadurch **gekennzeichnet,** daß der Vergußmasse-Körper aus Epoxidharz besteht.

12. Verbinderkörper nach einem oder mehreren der Ansprüche 1 bis 11, dadurch **gekennzeichnet,** daß ein zentral in der Sackbohrung angeordneter Kraftübertragungsstab (107) vorgesehen ist, der axial über seine Länge verteilt tellerartige Halteplatten (105a, 105b) aufweist.

13. Verbinderkörper nach Anspruch 12, dadurch **gekennzeichnet,** daß er ein einstückiges Gußteil ist.

14. Verbinderkörper nach Anspruch 13, dadurch **gekennzeichnet,** daß die Halteplatten (105a, 105b) radiale Lücken aufweisen, die ein Durchströmen der Vergußmasse ermöglichen.

15. Verfahren zum Einbringen des Verbinderkörpers nach einem der Ansprüche 1 bis 11 in eine Sackbohrung eines Holzbauteils, **gekennzeichnet** durch folgende Schritte:

a) Bohren einer Entlüftungsbohrung, die in den Boden der Sackbohrung mündet,

b) Einsetzen eines mindestens die erste, innere Abschlußplatte und den mindestens einen Kraftübertragungsstab umfassenden Einsetzkörpers (1) in die Sackbohrung,

c) Eintreiben des mindestens einen Stabdübels in das Holzbauteil derart, daß der Stabdübel die Sackbohrung durchsetzt, und

d) Einpressen einer Vergußmasse in die Öffnung der Sackbohrung, bis die Vergußmasse die Sackbohrung und mindestens einen Teil der Entlüftungsbohrung ausfüllt.

16. Verfahren nach Anspruch 15, dadurch **gekennzeichnet,** daß das Eintreiben mehrerer Stabdübel mit Hilfe einer auf das Holzbauteil aufgesetzten Schablone geschieht.

**Claims**

1. A connecting body anchored in a blind bore in a wooden building component, comprising the following features:

a) a first, inner closing plate (5; 105) having a predefined built-in outer cross section in accordance with the open cross section of the blind bore (3);

b) at least one load-transmitting bar (7, 8; 70; 71-74) extending parallel to the longitudinal axis of the blind bore (3), said bar being firmly connected with the first closing plate (5; 105) and extending therefrom toward the opening of the blind bore (3);

c) at least one bar dowel (11a, 11b, 11c; 11A, 11B; 11C, 11D) that is driven into the wooden building component (2) in a plane perpendicular to the load-transmitting bar and penetrates the blind bore (3) in such a way that its projection onto the plane of the first closing plate (5; 105) lies at least partly on the closing plate itself;

d) a rigid casting compound body (13) in the blind bore which surrounds the load-transmitting bar and the bar dowel and forms with these parts a compound block; and

e) a connecting member (9, 109, 70, 109') formed on the connecting body to permit connection with another body.

2. The connecting body of claim 1, **characterized** in that the at least one load-transmitting bar (70) is designed as a connecting member directed out of the blind bore (3).

3. The connecting body of claim 1 or 2, **characterized** in that a second, outer closing plate (6; 106) is provided whose outer cross section is adapted to the open cross section of the blind bore (3), and at least one load-transmitting bar (7, 8; 71-74) is affixed with its two ends to the sides facing each other of the first and second closing plates.

4. The connecting body of claim 3, **characterized** in that the second closing plate (6; 106) possesses a taphole (9; 109) as a connecting member.

5. The connecting body of any of claims 1 to 4, **characterized** in that the first, inner closing plate (5; 105) possesses a preferably central vent hole (10; 110) communicating with a vent bore (4) in the wooden building component (2).

6. The connecting body of any of claims 1 to 5, **characterized** in that the cross section of the closing plate or plates (5, 105, 6, 106) is circular.

7. The connecting body of any of claims 1 to 5, **characterized** in that the cross section of the closing plate or plates (5, 105, 6, 106) is rectangular.

8. The connecting body of any of claims 3 to 7, **characterized** in that the load-transmitting bar (7, 8, 70, 71-74) is a threaded steel bar that is welded with both its ends to side surfaces of the two closing plates (5, 105, 6, 106).

9. The connecting body of any of claims 1 to 8, **characterized** in that two, preferably four, load-transmitting bars (7, 8; 71-74) are provided in symmetrical arrangement.

10. The connecting body of any of claims 1 to 9 with four load-transmitting bars, **characterized** in that the load-transmitting bars (71-74) are structural steel pieces with a ribbed surface, and the four bars are dimensioned and disposed in the blind bore in such a way that each steel dowel (11C, 11D) is adjacent one load-transmitting bar on one side and two load-transmitting bars on the other side.

11. The connecting body of any of claims 1 to 10, **characterized** in that the casting compound body is made of epoxy resin.

12. The connecting body of any of claims 1 to 11, **characterized** in that a load-transmitting bar (107) in the center of the blind hole is provided that has dish-like holding plates (105a, 105b) distributed axially along its length.

13. The connecting body of claim 12, **characterized** in that it is a one-piece casting.

14. The connecting body of claim 13, **characterized** in that the holding places (105a, 105b) have radial gaps permitting the casting compound to flow through.

15. A method for incorporating the connecting body of any of claims 1 to 11 in a blind bore in a wooden building component, **characterized** by the following steps:

boring a vent bore opening into the bottom of the blind bore,

inserting an insert (1) including at least the first, inner closing plate and the at least one load-transmitting bar in the blind bore,

driving the at least one bar dowel into the wooden building component in such a way that the bar dowel penetrates the blind bore, and

pressing a casting compound into the opening of the blind bore until the casting compound fills in the blind bore and at least part of the vent bore.

16. The method of claim 15, **characterized** in that a plurality of bar dowels are driven in with the aid of a template placed on the wooden building component.

## Revendications

1. Elément d'assemblage ancré dans l'alésage borgne d'un élément de construction en bois, présentant les caractéristiques suivantes :
   a) une première plaque d'extrémité intérieure (5 ; 105) d'une section extérieure de montage correspondant à la section d'ouverture de l'alésage borgne (3) ;
   b) au moins une tige de transmission des forces (7, 8 ; 70 ; 71-74) disposée parallèlement à l'axe longitudinal de l'alésage borgne (3), solidaire de la première plaque d'extrémité (5 ; 105) et orientée à partir de cette dernière dans la direction de l'ouverture de l'alésage borgne (3) ;
   c) au moins une cheville (11a, 11b, 11c ; 11A, 11B ; 11C, 11D) enfoncée dans l'élément de construction en bois (2) dans un plan perpendiculaire à la tige de transmission des forces et traversant l'alésage borgne (3) de manière à ce que sa projection dans le plan de la première plaque d'extrémité (5 ; 105) se situe au moins partiellement sur la plaque d'extrémité elle-même ;
   d) un bouchon de mastic (13) rigide dans l'alésage borgne (3), entourant la tige de transmission des forces et la cheville et formant avec celles-ci un bloc d'assemblage, et

e) une pièce de liaison (9, 109, 70, 109') formée sur l'élément d'assemblage pour la liaison avec un autre élément.

2. Elément d'assemblage selon la revendication 1, caractérisé en ce que l'unique tige de transmission des forces (70) a la forme d'un élément de liaison sortant de l'alésage borgne (3).

3. Elément d'assemblage selon la revendication 1 ou 2, caractérisé en ce qu'il est prévu une seconde plaque d'extrémité, extérieure, (6 ; 106) dont la section extérieure est adaptée à la section d'ouverture de l'alésage borgne (3) et en ce qu'au moins une tige de transmission des forces (7, 8 ; 71-74) est fixée par ses deux extrémités sur les faces opposées l'une à l'autre de la première et de la seconde plaques d'extrémité.

4. Elément d'assemblage selon la revendication 4, caractérisé en ce que la seconde plaque d'extrémité (6 ; 106) porte comme élément de liaison un alésage fileté (9 ; 109).

5. Elément d'assemblage selon l'une des revendications 1 à 4, caractérisé en ce que la première plaque d'extrémité intérieure (5 ; 105) possède un trou de désaérage (10 ; 110), de préférence central, qui est relié à un canal de désaérage (4) dans l'élément de construction en bois (2).

6. Elément d'assemblage selon l'une des revendications 1 à 5, caractérisé en ce que la section de la ou des plaques d'extrémité (5, 105, 6, 106) est circulaire.

7. Elément d'assemblage selon l'une des revendications 1 à 5, caractérisé en ce que la section de la ou des plaques d'extrémité (5, 105, 6, 106) est quadrangulaire.

8. Elément d'assemblage selon l'une des revendications 3 à 7, caractérisé en ce que la tige de transmission des forces (7, 8, 70, 71-74) est une tige filetée qui est soudée par ses deux extrémités sur les faces des deux plaques d'extrémité (5, 105, 6, 106).

9. Elément d'assemblage selon l'une des revendications 1 à 8, caractérisé en ce qu'il est prévu deux et de préférence quatre tiges de transmission des forces (7, 8 ; 71-74) disposées symétriquement.

10. Elément d'assemblage selon l'une des revendications 1 à 9 avec quatre tiges de transmission des forces, caractérisé en ce que les tiges de transmission des forces (71-74) sont des tronçons d'acier de construction à surface nervurée et en ce que les quatre tiges sont dimensionnées et placées dans l'alésage borgne (3) de manière à ce que chaque cheville (11C, 11D) ait d'un côté une tige de transmission des forces et de l'autre deux.

11. Elément d'assemblage selon l'une des revendications 1 à 10, caractérisé en ce que le bouchon de mastic est fait de résine époxyde.

12. Elément d'assemblage selon une ou plusieurs des revendications 1 à 11, caractérisé en ce qu'il est prévu une tige de transmission des forces (107) dis-posée centralement dans l'alésage borgne (3) et portant réparties axialement sur sa longueur des plaques de maintien (105a, 105b) en forme de disque.

13. Elément d'assemblage selon la revendication 12, caractérisé en ce qu'il est moulé d'une seule pièce.

14. Elément d'assemblage selon la revendication 13, caractérisé en ce que les plaques de maintien (105a, 105b) présentent des passages permettant l'écoulement du mastic.

15. Procédé de montage de l'élément d'assemblage selon l'une des revendication 1 à 11 dans l'alésage borgne d'un élément de construction en bois, caractérisé par les étapes suivantes :
    a) perçage d'un trou de désaérage débouchant dans le fond de l'alésage borgne ;
    b) insertion dans l'alésage borgne d'un insert (1) composé au moins de la première plaque d'extrémité intérieure et au moins de la tige de transmission des forces ;
    c) enfoncement d'au moins une cheville dans l'élément de construction en bois, de manière à ce que la cheville traverse l'alésage borgne ;
    d) injection d'un mastic dans l'ouverture de l'alésage borgne, jusqu'à ce qu'il remplisse l'alésage borgne et au moins une partie du canal de désaérage.

16. Procédé selon la revendication 15, caractérisé en ce que l'insertion de plusieurs chevilles se fait à l'aide d'un gabarit placé sur l'élément de construction en bois.

Fig.1

Fig2

Fig.3

Fig. 4

*Fig.5*

Fig. 6

Fig. 7